# EUROPEAN PATENT APPLICATION

(11) **EP 4 648 078 A1**
(43) Date of publication of application: **12.11.2025**
(21) Application number: 24175114.8
(22) Date of filing: 10.05.2024
(51) Int. Cl.: H01H 33/02, H02B 13/01, H01H 33/56, H02B 1/28, H01B 3/40, H02B 13/045

(54) **GAS INSULATED ELECTRIC APPARATUS**

(71) Applicant: Hitachi Energy Ltd, 8050 Zürich (CH)
(72) Inventor: Ehrler, Isabell, 8045 Zurich (CH); Gatzsche, Michael, 8162 Steinmaur (CH); Donzel, Lise, 5430 Wettingen (CH); Struzziero, Giacomo, 8049 Zürich (CH); Schulthess, Markus, 8340 Hinwil (CH)
(74) Representative: Michalski Hüttermann & Partner Patentanwälte mbB

(57) **Abstract**

The invention relates to a gas insulated electric apparatus (1) comprising an insulating tube (2) and an electric high voltage appliance (3) arranged inside the insulating tube (2), whereby the insulating tube (2) comprises a permeation barrier (5) applied onto an outside of the insulating tube (2), applied onto an inside of the insulating tube (2) and/or arranged within the insulating tube (2) and circumferentially surrounding the electric high voltage appliance (3), the insulating tube (2) contains an insulation gas (4) comprising at least 70 % by volume of CO₂ and/or N₂ and comprising an elevated and pre-determined operating gas pressure level, and the permeation barrier (5) comprises aluminium oxide and/or silicon oxide as permeation barrier layer (6), a carrier layer (7) protecting the barrier layer (6), which carrier layer (7) surrounds the permeation barrier layer (6) and a wettability layer (8) for increasing a surface energy, which wettability layer (8) surrounds both the permeation barrier layer (6) and the carrier layer (7).

## Description

### Technical Field

The invention relates to a gas insulated electric apparatus comprising an insulating tube and an electric high voltage appliance arranged inside the insulating tube, whereby the insulating tube comprises a permeation barrier circumferentially surrounding the electric high voltage appliance and the insulating tube contains an insulation gas comprising at least 70 % by volume of CO₂ and/or N₂ and comprising an elevated and pre-determined operating gas pressure level. The invention further relates to a method for manufacturing a gas insulated electric apparatus comprising an electric high voltage appliance, comprising the steps of: Manufacturing an insulating tube for arranging the electric high voltage appliance inside the insulating tube, during manufacturing, applying a permeation barrier, and filling the insulating tube with an insulation gas comprising at least 70 % by volume of CO₂ and/or N₂ and comprising an elevated and pre-determined operating gas pressure level.

### Background Art

In gas insulated electric apparatuses, such as medium and high voltage switchgears or control gears, an electrical active part is arranged in a gas-tight insulating tube or housing. The insulating tube or housing defines an insulating space that is arranged to contain an insulation gas at an elevated pressure, which can be several bars. The insulating space separates the insulating tube from the electrical active part without letting electrical current pass through.

The insulation gas serves as an electric insulation medium and prevents electric discharge between the insulating tube and the electrical components inside the insulating tube. Further, the insulation gas serves as a cooling medium for suppressing temperature rise due to electric current. In a switchgear which typically comprises a circuit breaker and/or a disconnector, the insulation gas also serves as an arc-extinguishing medium for extinguishing arcs that may occur at the switching operation. Conventionally, sulphur hexafluoride gas, SF₆ or SF₆ gas, has been widely used as insulation gas. However, in view of the known environmental drawbacks of SF₆, the use of other insulation gases has been proposed, such as carbon dioxide, CO₂, Nitrogen, N₂, mixtures thereof or other gases.

Generally, the insulating tube of the gas insulated electrical apparatuses is filled with the insulation gas up to a pre-determined operational rated gas pressure level before it is taken into operation. The pre-determined pressure level can be chosen depending on the insulation gas, switched current/voltage and/or the switching capacity of the electric apparatus. The pressure level is measured during the operation continuously or at pre-determined intervals.

If the gas pressure level is below a pre-defined lowest acceptable pressure level, also called alarm level, an alarm is generated to the operator. If the alarm is generated, the insulating tube should be filled with insulation gas to the pre-determined operational gas pressure level. If the insulating tube is not replenished, there is a risk that the insulation gas pressure will continue to decrease and consequently operational disturbances are caused.

Normally, the electrical apparatus has a pre-defined blocking pressure level, also named lock-out gas pressure level, and when the blocking pressure level is reached, the function of the gas insulated electric apparatus will be blocked and ceased. When the gas insulated electrical apparatus is a switchgear, it is usually configured to react in one of two ways: either the function of the gas insulated electric apparatus will be blocked such that it will not be possible to open or close an electric contact of the switchgear, or the electric contact will be forced open and stay open.

The refilling operation and monitoring of the alarms in the electrical apparatuses are time and labour consuming tasks. Therefore, there is a need to reduce service occasions while operational disturbances of gas insulated electrical apparatuses are effectively avoided.

### Summary of invention

It is therefore an object of the invention to provide maintain properties of an insulation material of the insulating tube as best as possible for avoiding CO₂ and/or N₂ permeation.

The object of the invention is solved by the features of the independent claims. Preferred implementations are detailed in the dependent claims.

Thus, the object is solved by a gas insulated electric apparatus comprising an insulating tube and an electric high voltage appliance arranged inside the insulating tube, whereby
the insulating tube comprises a permeation barrier applied onto an outside of the insulating tube, applied onto an inside of the insulating tube and/or arranged within the insulating tube and circumferentially surrounding the electric high voltage appliance,
the insulating tube contains an insulation gas comprising at least 70 % by volume of CO₂ and/or N₂ and comprising an elevated and pre-determined operating gas pressure level, and
the permeation barrier comprises aluminium oxide and/or silicon oxide as permeation barrier layer, a carrier layer protecting the permeation barrier layer, which carrier layer surrounds the permeation barrier layer and a wettability layer for increasing a surface energy, which wettability layer surrounds both the permeation barrier layer and the carrier layer.

In order to lower the global warming potential, GWP, alternative isolation gas mixtures are used other than SF₆, which contain molecules such as CO₂ and/or N₂ having a lower kinetic diameter and/or a higher solubility in the respective material of an insulating tube consisting in particular of epoxy based composite as insulator. Tests have demonstrated that CO₂ and/or N₂ alternative isolation gas mixtures permeate at high rates through such epoxy based insulating tube, which leads to a significant pressure drop and finally results in reduced dielectric and or current switching behaviour of the gas insulated electric apparatus respectively the in particular epoxy based composite manufactured insulating tube. In addition, H₂O can permeate into an insulation space defined by the insulating tube and can lead directly or indirectly to decomposition of the insulation gas, to corrosion of components inside the gas insulated electric apparatus such as the electric high voltage appliance or to lower dielectric withstand of the insulating tube.

Prior art insulating tubes typically comprise and/or the insulating tube comprises a material having a CO₂ permeation coefficient at 20 °C of more than 1.0 cm³ * mm / (m² * day * bar) and/or a CO₂ solubility at 20 °C of at least 1.0 * 10⁻⁵ kmol / (m³ * kPa). Such material leads to significant CO₂ and/or N₂ pressure drop. By applying the proposed permeation barrier, the CO₂ and/or N₂ pressure drop is significantly reduced, in particular by at least 20, 50 or 80%. The term contains and/or is surrounded by the insulation gas means in particular that the insulating tube comprises the insulation gas arranged which is such wise within the insulating tube. In this respect to the insulation tube can be closed, in particular at upper and lower ends for hosting the insulation gas.

In sum, the proposes gas insulated electric apparatus consists of the insulating tube with the permeation barrier as layer of a particular thickness and material to decrease gas permeation through the insulating tube to a certain degree and therefore reduces a risk of accumulation of gas. Thereby, the permeation barrier can be applying, for example during a winding process of the insulating tube, as a first winding layer, as an intermediate layer and/or as a last winding layer. Such wise the permeation barrier can be applied onto an outside surface of the insulating tube, can be applied onto an inside surface of the insulating tube and/or arranged within the insulating tube. Thereby in any case the permeation barrier circumferentially surrounds the electric high voltage appliance.

Thus, a key point of the invention is therefore to provide a layer of in particular a low permeation material, LPM, having a very low permeation coefficient for the respective gas i.e. CO₂ and/or N₂ as permeation barrier. Said LPM layer respectively the permeation barrier layer and/or the permeation barrier is intended for reducing gas permeability. For allowing a simple implementation for example wide band strips or sheets can be used as permeation barrier. By means of the permeation barrier air bubbles and/or cracks leading to potential failure of the epoxy based composite insulator respectively insulating tube under dielectric or environmental stress can be effectively avoided, while a simple manufacturing of the permeation barrier and thus cost-effective manufacturing of the gas insulated electric apparatus becomes available. In addition, the proposed solution avoids permeation through the preferably epoxy based composite insulator respectively insulating tube, which avoids a pressure drop within the insulating tube resulting in stable and reliable dielectric and or current switching behaviour. Having the permeation barrier applied onto the inside of or within the insulating tube bears the advantage that only very few radial material exists within the insulating tube for saturating the insulating gas therein. Thus, the permeation barrier is preferably arranged as close as possible to the inside of the insulating tube.

The insulating tube, sometimes also referred to as enclosure, preferably comprises a tube-like or conical tube-like shape and/or is preferably hermetically sealed. Thus, the insulation gas preferably completely surrounds the electric high voltage appliance. The permeation barrier arranged within the insulating tube means in particular that the permeation barrier is encapsulated within the insulating tube, thus for example not visible from an outside or inside of the insulating tube. The insulating tube can be filled with CO₂ and/or N₂ as insulation gas by at least 70 % by volume, but may also be completely filled with CO₂ and/or N₂. The remainder up to 100 % by volume in the insulation gas may comprise for example oxygen O₂ or another gas to an extent of less than 30 % by volume. Preferably, the operating gas pressure level is from 0.7 or 1.0 MPa up to 1.2 MPa or 1.4.

In one implementation, the insulating gas comprises 2 to 15, in particular 3 to 5, volume % of C4-fluoronitrile and 2 to 15, in particular 4 to 11, volume % of O₂, and further comprises CO₂ as carrier gas. More specifically, CO₂ can be present in an amount of at least 70 volume %. The term C4-fluoronitrile preferably refers to heptafluoroisobutyronitrile. The insulating gas may comprise, in addition to CO₂, for example an organofluorine compound, for example a fluoronitrile, and in particular a perfluoronitrile, a C4-fluoronitrile and/or a heptafluoroisobutyronitrile. More particularly, the fluoronitrile can be a perfluoroalkylnitrile, specifically perfluoroacetonitrile, perfluoropropionitrile (C₂F₅CN) and/or perfluorobutyronitrile (C₃F₇CN). Preferably, the fluoronitrile can be perfluoroisobutyronitrile (according to the formula (CF₃)₂CFCN) and/or perfluoro-2- methoxypropanenitrile (according to the formula CF₃CF(OCF₃)CN). Of these, perfluoroisobutyronitrile is particularly preferred due to its low toxicity.

The permeation barrier preferably extends across the complete lateral inner and/or outer surface of the insulating tube. Further, the permeation layer is preferably surrounded on its complete or at least on its partial surface with the carrier layer. In an equal manner, the carrier layer is preferably surrounded on its complete or at least on its partial surface with the wettability layer. Thereby, the carrier layer can be provided on one side of the permeation layer or on both sides of the permeation layer. In an equal manger, the wettability layer can be provided on one side of the carrier layer or on both sides of the carrier layer. The insulating tube can be sealed with one or more sealings, for example made of a polymeric material of various types, for example nitrile rubber, NBR, ethylene propylene diene monomer rubber, EPDM, and/or isobutylene isoprene rubber, (X)IIR, rubber, but not limited to these materials.

The proposed materials for the permeation barrier provide excellent barrier properties, high heat withstand, no shrinkage and good flexibility. The carrier layer preferably encapsulates the permeation barrier layer on both sides, thereby serving as protection from mechanical stress. The carrier layer is intended for providing good adhesion properties. The permeation barrier comprising aluminium oxide and/or silicon oxide achieves excellent gas barrier properties. The wettability layer preferably provided from polyamide achieves good wettability and adhesion properties and preferably epoxy resins on both sides. Aluminium oxide, or aluminium(III) oxide, can be understood as a chemical compound of aluminium and oxygen with the chemical formula Al₂O₃. SiOₓ compound and/or aluminium oxide are preferably applied by chemical vapor deposition, in particular by plasma impulse. Compared to prior art used material EVOH, having a water absorption of around 10%, the proposed solution comprises a lower water absorption of around 0.2% PET and around 1% PA.

According to a preferred implementation, the permeation barrier layer is surrounded on both sides by the carrier layer and/or the wettability layer and/or the permeation barrier comprises one permeation barrier layer, two carrier layer and two wettability layer. In other words, the permeation barrier preferably comprises of a first wettability layer, a first carrier layer provided on the first wettability layer, the permeation barrier layer provided on the first carrier layer, a second carrier layer provided on the permeation barrier layer and a second wettability layer provided on the second carrier layer. Said layers are preferably provided as film and/or directly applied onto each other, preferably only with glue and/or surface activation between the respective layers. Such way the term surrounding means preferably that the respective layer is directly applied to another layer, maybe with glue and surface activation in-between the respective layers. The term surround may also means in particular completely encasing and/or encompassing.

In a further preferred implementation, in particular the permeation barrier comprises glue applied onto and/or between the permeation barrier layer, the carrier layer, the wettability layer and the insulating tube. Glue is intended for connecting the respective layers with each other. Most glue is preferably provided between the carrier layer and the wettability layer.

According to another preferred implementation, an outer side of the carrier layer and/or the wettability layer facing away from the permeation barrier layer and/or a side of the insulating tube facing the wettability layer is provided with a surface activation. The surface activation may result from plasma and/or chemical threating and/or chemical bonding and/or corona treatment.

In another preferred implementation the carrier layer comprises or consists of polyethylene terephthalate, PET, and/or the wettability layer comprises or consists of polyamide. The carrier layer is preferably provided for protecting the permeation barrier layer against mechanical stress. The carrier layer may also comprise or consist of polypropylene, PP, polyamide, PA, polyethylene, PE, polystyrene, PS, polyethylene naphtalate, PEN. The wettability layer is preferably provided for increasing the surface energy such that the wettability layer has a better retention and/or holds better on the carrier layer. The wettability layer is further preferably provided as layer with increased surface energy, for example as a film of PA or PET, or as a chemical primer layer which increases surface energy for example on polyurethan, polyacrylate or on polyethylene terephthalate basis, or through corona pre-treatment.

In a further preferred implementation, the permeation barrier layer comprises a thickness of ≤ 1.000 nm, ≤ 900 nm, ≤ 800 nm or ≤ 700 nm, the carrier layer and/or the wettability layer comprises a thickness of ≥ 5 and ≤ 120 µm, ≥ 5 and ≤ 100 µm or ≥ 10 and ≤ 80 µm, and/or the permeation barrier layer, the carrier layer and/or the wettability layer are provided as sheet and/or a strip, preferably as preferably overlapping wrapped strips, preferably overlapping in axial and/or circumferential direction. The strips can be provided as wide band strips. Preferably, the sheets and/or the strips overlap across the complete axial and/or circumferential extension of the respective layer. In circumferential extension the sheet and/or the strip may comprise no gap, a gap or may overlap. Alternatively, the permeation barrier layer, the carrier layer and/or the wettability layer can be applied by spraying, in particular on an inner and/or outer surface respectively wall of the insulation tube. Further preferably, the permeation barrier respectively its layers are provided as film.

According to another preferred implementation, the insulation tube is provided gas impermeable and/or comprises epoxy composite material. As outlined before, tests have demonstrated that CO₂ and/or N₂ alternative isolation gas mixtures permeate at high rates through such epoxy based insulating tube, which leads to a significant pressure drop and finally results in reduced dielectric and or current switching behaviour of the gas insulated electric apparatus respectively the in particular epoxy based composite manufactured insulating tube.

In a further preferred implementation, the gas insulated electric apparatus comprises a plurality of permeation barriers preferably arranged distant to each other. Having a plurality of permeation barriers and/or a permeation barrier with higher thickness results in lower permeation. Thus, a limit-thickness of the permeation barrier and/or number of permeation barriers may be necessary to ensure a specific permeation rate is not exceeded such that a specified lifetime before a refill with insulating gas is required can be ensured.

According to another preferred implementation, the electric high voltage appliance is provided as a high voltage interrupter, whereby the electric apparatus is provided as a gas insulated live tank circuit breaker, as a gas insulated dead tank circuit breaker, as a bushing or as a gas insulated switchgear, and/or as an outdoor gas insulated electric apparatus. In either one of these implementations it will be of great value to have a gas insulated electric apparatus that will have a reliable functionality for many years without requiring refilling of insulation gas. In case the gas insulated electric apparatus is provided as outdoor gas insulated electric apparatus, the insulating tube can be covered with silicone sheds. Alternatively, in case the insulating tube is provided as epoxy based composite insulator, layer of the insulator can be imbedded within the silicone sheds following the same principles described before.

The object is further solved by a method for manufacturing a gas insulated electric apparatus comprising an electric high voltage appliance, comprising the steps of:
Manufacturing an insulating tube for arranging the electric high voltage appliance inside the insulating tube,
during manufacturing, applying a permeation barrier onto an outside of the insulating tube, applying the permeation barrier onto an inside of the insulating tube and/or arranging the permeation barrier within the insulating tube such that the permeation barrier circumferentially surrounds the electric high voltage appliance arranged inside the insulating tube, and
filling the insulating tube with an insulation gas comprising at least 70 % by volume of CO₂ and/or N₂ and comprising an elevated and pre-determined operating gas pressure level, whereby
the permeation barrier comprises aluminium oxide and/or silicon oxide as permeation barrier layer, a carrier layer for protecting the permeation barrier layer, which carrier layer for surrounds the permeation barrier layer and a wettability layer for increasing a surface energy, which wettability layer surrounds both the permeation barrier layer and the carrier layer.

According to another preferred implementation, the method comprises the steps of:
Applying the wettability layer onto the insulating tube,
Applying the carrier layer onto the wettability layer,
Applying the permeation barrier layer onto the carrier layer,
Applying another carrier layer onto the permeation barrier layer, and
Applying another wettability layer onto the another carrier layer.

In a further preferred implementation, the method comprises the step of:
Applying glue onto and/or between the barrier layer, the carrier layer, the wettability layer and/or the insulating tube.

According to another preferred implementation, the method comprises the step of:
Providing an outer side of the carrier layer and/or the wettability layer facing away from the permeation barrier layer and/or a side of the insulating tube facing the wettability layer with a surface activation.

In a further preferred implementation, the method comprises the step of:
Providing a plurality of permeation barriers preferably arranged distant to each other.

According to another preferred implementation, the insulation tube is provided gas impermeable and/or comprises epoxy composite material.

In a further preferred implementation, the electric high voltage appliance is provided as a high voltage interrupter, whereby the electric apparatus is provided as a gas insulated live tank circuit breaker, as a gas insulated dead tank circuit breaker, as a bushing or as a gas insulated switchgear, and/or as an outdoor gas insulated electric apparatus.

Further implementations and advantages of the method are directly and unambiguously derived by the person skilled in the art from the apparatus as described before.

### Brief description of drawings

These and other aspects of the invention will be apparent from and elucidated with reference to the implementations described hereinafter.

In the drawings:
Fig. 1a shows a gas insulated electric apparatus with an enlarged part of an insulating tube of the apparatus in a schematic top view according to an exemplary implementation,
Fig. 1b shows an enlarged part of the insulating tube of the apparatus in a schematic top view according to a further exemplary implementation,
Fig. 2 shows enlarged parts of insulating tubes of the apparatus in schematic top views according to further exemplary implementations,
Fig. 3 shows the gas insulated electric apparatus in a schematic side view according to the exemplary implementations, and
Fig. 4 shows the enlarged part of an insulating tube of the apparatus in a schematic top view according to the exemplary implementation.

### Description of implementations

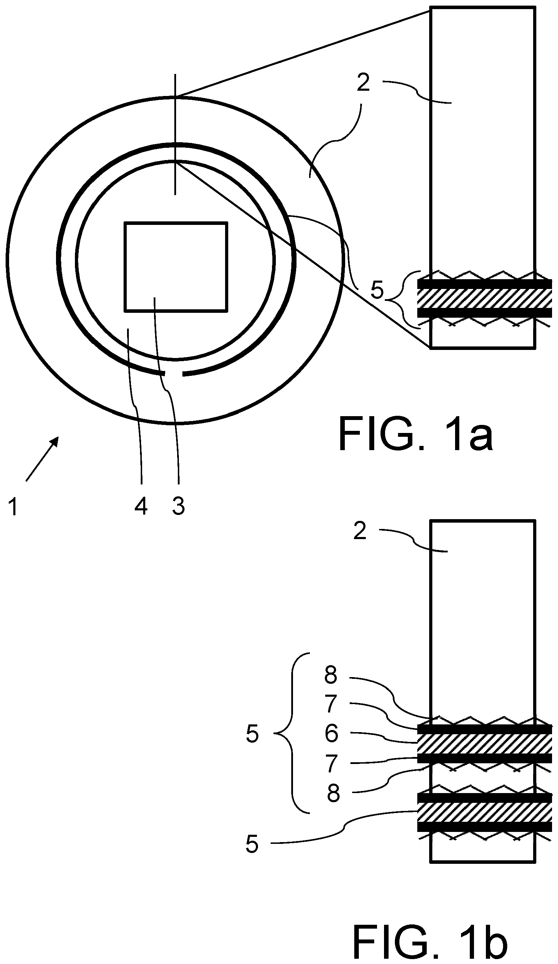

Fig. 1 shows a gas insulated electric apparatus 1 according to an exemplary implementation in a schematic top view. The gas insulated electric apparatus 1 can be provided a gas insulated circuit breaker, finding its application for example as a gas insulated live tank circuit breaker, a bushing or a gas insulated dead tank circuit breaker. Alternatively, the gas insulated electric apparatus 1 may be a gas insulated switchgear, or a control gear such as a gas insulated instrument transformer. The gas insulated apparatus 1 can be suitable for use outdoors.

The gas insulated electric apparatus 1 generally comprises an electrically insulating tube 2 having a shape of a tube shown in top view with a wall made of a polymeric material and/or a composite material, in particular an epoxy based composite material as insulator capable to resist a pressure inside the insulating tube 1. The insulating tube 2 is typically manufacturing by wet-wound fibers and/or in a vacuum impregnation process, thus resulting in a high mechanical strength and good dielectric properties of the insulator. Inside the insulating tube 2 arranged is an electric high voltage appliance 3, which is provided as a high voltage interrupter and is only schematically shown in Fig. 1. The insulating tube 2 is hermetically sealed and filled with an insulation gas 4, which comprises at least 70 % by volume of CO₂ and/or N₂ at an elevated and pre-determined operating gas pressure level ranging from 0.7 or 1.0 MPa up to 1.2 or 1.4 MPa.

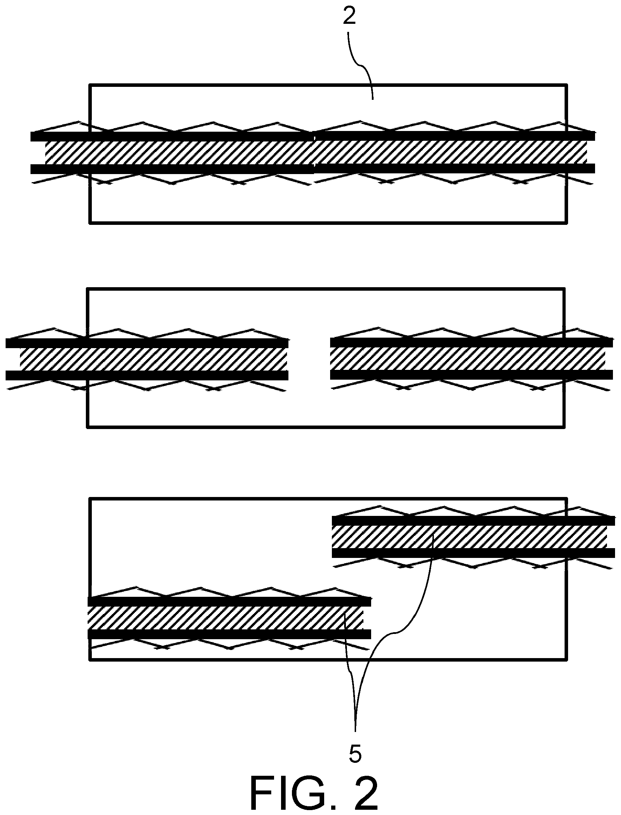

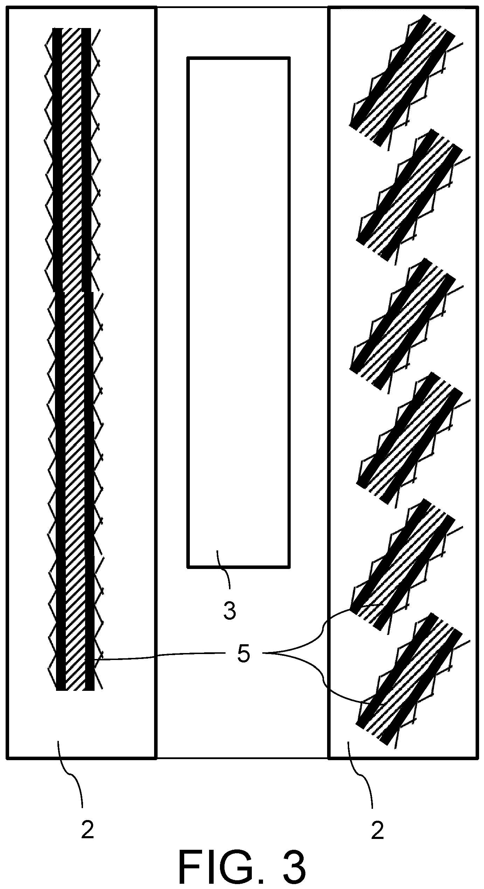

The insulating tube 2 comprises applied onto an outside of the insulating tube 2, applied onto an inside of the insulating tube 2 and/or arranged within the insulating tube 2, as shown in Fig. 1a, and circumferentially surrounding the electric high voltage appliance 3, a permeation barrier 5 described later in more detail. Circumferentially, as shown in Fig. 2 in the top, the permeation barrier 5 can have no circumferential gap, can have a circumferential gap, as shown in Fig. 2 in the middle, or can be arranged circumferentially overlapping, as shown in Fig. 2 on the bottom. Without gap, the permeation barrier 5 fully respectively completely extends around the electric high voltage appliance 3. The gap might be 1, 2, 5 or 10 mm wide. In axial direction, depicted in Fig. 3, the permeation barrier 5 may also cover the complete axial extension of the insulating tube 2, as shown on the left side of Fig. 3. Alternatively, as shown on the right side of Fig. 3, permeation barrier 5 can be arranged in an overlapping manner. Overlapping means that in radial direction the electric high voltage appliance 3 is always surrounded by any of the various permeation barriers 5.

Generally, the permeation barrier 5 may be provided as a sheet and/or as a strip, for example as said overlapping wrapped strips. Also, as depicted in Fig. 1b, multiple layers of individual permeation barriers 5 can be present within the insulating tube 2 arranged distant to each other. Thereby, as shown in Fig. 1a, the permeation barrier 5 is arranged inside the insulating tube 2 adjacent to an inside respectively inner surface of the insulating tube 2. In other words, the permeation barrier 5 is preferably provided closer to the inside than to the outside of the insulating tube 2. The outside respectively outer surface of the insulating tube 2, i.e. the surface facing the surroundings of the insulating tube 2, can comprise a plurality of sheds, not shown. The sheds may extend along the whole or partial length of the insulating tube.

When manufacturing the insulating tube 2, epoxy composites may be placed around a core representing a negative form of the inner surface of the designated insulating tube 2, followed by placing the permeation barrier 5 onto the epoxy composites and again followed by another layer of epoxy composites up to the designated outer surface of the designated insulating tube 2. When the insulating tube 2 is cured, the core can be removed and the electric high voltage appliance 3 can be placed within the insulating tube 2. The insulating tube 2 is sealed and filled with the insulation gas 4 up to the operating gas pressure level.

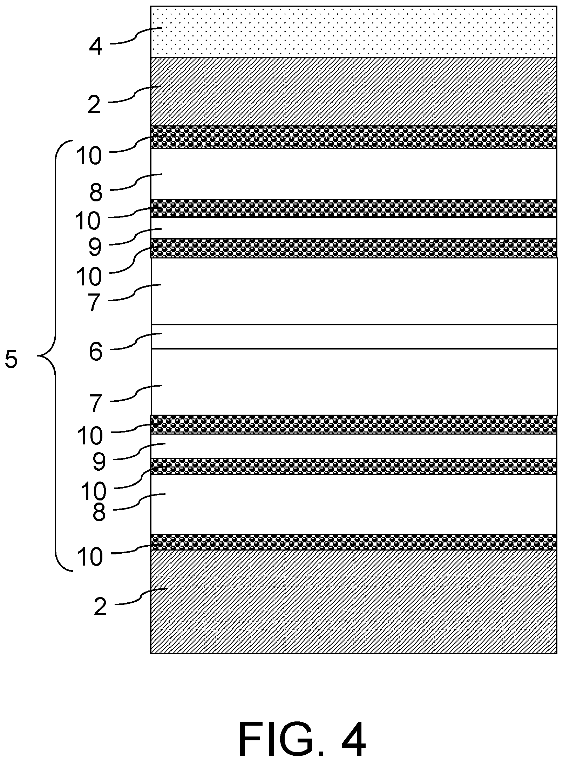

Fig. 4 shows the permeation barrier 5 in more detail in a side view. Shown from the bottom to the top is the insulation tube 2, followed by a surface activation 10 applied onto the insulation tube 2 and/or the following wettability layer 8. Said surface activation 10 is applied via corona treatment, or alternatively by plasma and/or chemical threating and/or chemical bonding. The wettability layer 8 comprises polyamide having a thickness between ≥ 5 and ≤ 100 µm. An opposite side of the wettability layer 8 is again provided with surface activation 10 and with a layer respectively a film of glue 9 arranged thereon. Arranged onto the glue layer 9 is a carrier layer 7 comprising polyethylene terephthalate, PET, and having a thickness of ≥ 5 and ≤ 100 µm. The side of the carrier layer 7 facing the glue layer 9 is again provided with surface activation 10. Arranged on the carrier layer 7 is a permeation barrier layer 6 comprising aluminium oxide and/or silicon oxide, and having a thickness of ≤ 900 nm.

A further carrier layer 7 comprising polyethylene terephthalate, PET, and having a thickness of ≥ 5 and ≤ 100 µm is provided onto the permeation barrier layer 6, followed by surface activation 10 provided onto the side of the further carrier layer 7 facing away from the permeation barrier layer 6, and followed by glue 9 and a further wettability layer 8 comprises polyamide having a thickness between ≥ 5 and ≤ 100 µm, which comprises surface activation 10 on both sides i.e. including the side facing the glue 9. Finally, the insulation tube 2 and the insulating gas 4 follow. Such way a symmetrical stack of layers is formed, where the permeation barrier layer 6 is surrounded on both sides by two carrier layers 7 and two wettability layers (8), which encapsulate the two carrier layers 7.

In a respective method for manufacturing the gas insulated electric apparatus 1 comprising the electric high voltage appliance 3, first the insulating tube 2 for arranging the electric high voltage appliance 3 inside the insulating tube 2 is manufactured. During manufacturing, the permeation barrier 5 is applied onto the outside of the insulating tube 2, onto the inside of the insulating tube 2 and/or is arranged within the insulating tube, as shown in Fig. 4, such that the permeation barrier 5 circumferentially surrounds the electric high voltage appliance 3 arranged inside the insulating tube 2.

Thereafter, once the electric high voltage appliance 3 is arranged inside the insulating tube 2, the insulating tube 2 is filled with the insulation gas 4 comprising at least 70 % by volume of CO₂ and/or N₂ and comprising an elevated and pre-determined operating gas pressure level. As explained before, the permeation barrier 5 comprises aluminium oxide and/or silicon oxide as permeation barrier layer 6, polyethylene terephthalate, PET, as carrier layer 7 surrounding the permeation barrier layer 6 and polyamide as wettability layer 8 surrounding both the permeation barrier layer 6 and the carrier layer 7. Such wise the permeation barrier layer 6 is sandwiched between two carrier layers 7, while the two carrier layers 7 and the permeation barrier layer 6 are sandwiched between two wettability layers 8.

Specifically, the wettability layer 8 is applied onto the insulating tube 2, the carrier layer 7 is applied onto the wettability layer 8, the permeation barrier layer 6 is applied onto the carrier layer 7, another, second carrier layer 7 onto the permeation barrier layer 6, and another, second wettability layer 8 is applied onto the another, second carrier layer 7. Further, glue 9 is applied onto and/or between the carrier layers 7 and the wettability layers 8. Even further, surface activation 10 is applied on both sides of the wettability layers 8 and on an outer side of the carrier layers 7 facing away from the permeation barrier layer 6.

While the invention has been illustrated and described in detail in the drawings and foregoing description, such illustration and description are to be considered illustrative or exemplary and not restrictive; the invention is not limited to the disclosed implementations. Other variations to be disclosed implementations can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 1: electric apparatus
- 2: insulating tube
- 3: electric high voltage appliance
- 4: insulation gas
- 5: permeation barrier
- 6: permeation barrier layer
- 7: carrier layer
- 8: wettability layer
- 9: glue
- 10: surface activation

## Claims

1. A gas insulated electric apparatus (1) comprising an insulating tube (2) and an electric high voltage appliance (3) arranged inside the insulating tube (2), whereby
the insulating tube (2) comprises a permeation barrier (5) applied onto an outside of the insulating tube (2), applied onto an inside of the insulating tube (2) and/or arranged within the insulating tube (2) and circumferentially surrounding the electric high voltage appliance (3),
the insulating tube (2) contains an insulation gas (4) comprising at least 70 % by volume of CO₂ and/or N₂ and comprising an elevated and pre-determined operating gas pressure level, and
the permeation barrier (5) comprises aluminium oxide and/or silicon oxide as permeation barrier layer (6), a carrier layer (7) protecting the permeation barrier layer (6), which carrier layer (7) surrounds the permeation barrier layer (6), and a wettability layer (8) for increasing a surface energy, which wettability layer (8) surrounds both the permeation barrier layer (6) and the carrier layer (7).

2. The gas insulated electric apparatus (1) according to the previous claim, whereby the permeation barrier layer (6) is surrounded on both sides by the carrier layer (7) and/or the wettability layer (8) and/or the permeation barrier (5) comprises one permeation barrier layer (6), two carrier layer (7) and two wettability layer (8).

3. The gas insulated electric apparatus (1) according to any of the previous claims, comprising glue (9) applied onto and/or between the permeation barrier layer (6), the carrier layer (7), the wettability layer (8) and the insulating tube (2), and/or whereby an outer side of the carrier layer (7) and/or the wettability layer (8) facing away from the permeation barrier layer (6) and/or a side of the insulating tube (2) facing the wettability layer (8) is provided with a surface activation (10).

4. The gas insulated electric apparatus (1) according to any of the previous claims, whereby the carrier layer (7) comprises polyethylene terephthalate, PET, and/or the wettability layer (8) comprises polyamide.

5. The gas insulated electric apparatus (1) according to any of the previous claims, whereby the permeation barrier layer (6) comprises a thickness of ≤ 1.000 nm, ≤ 900 nm, ≤ 800 nm or ≤ 700 nm, the carrier layer (7) and/or the wettability layer (8) comprises a thickness of ≥ 5 and ≤ 120 µm, ≥ 5 and ≤ 100 µmor ≥ 10 and ≤ 80 µm, and/or the permeation barrier layer (6), the carrier layer (7) and/or the wettability layer (8) are provided as sheet and/or a strip, preferably as preferably overlapping wrapped strips, preferably overlapping in axial and/or circumferential direction.

6. The gas insulated electric apparatus (1) according to any of the previous claims, whereby the insulation tube (2) is provided gas impermeable and/or comprises epoxy composite material.

7. The gas insulated electric apparatus (1) according to any of the previous claims, comprising a plurality of permeation barriers (5) preferably arranged distant to each other.

8. The gas insulated electric apparatus (1) according to any of the previous claims, whereby the electric high voltage appliance (3) is provided as a high voltage interrupter, whereby the electric apparatus (1) is provided as a gas insulated live tank circuit breaker, as a gas insulated dead tank circuit breaker, as a bushing or as a gas insulated switchgear, and/or as an outdoor gas insulated electric apparatus.

9. Method for manufacturing a gas insulated electric apparatus (1) comprising an electric high voltage appliance (3), comprising the steps of:
Manufacturing an insulating tube (2) for arranging the electric high voltage appliance (3) inside the insulating tube (2),
during manufacturing, applying a permeation barrier (5) onto an outside of the insulating tube (2), applying the permeation barrier (5) onto an inside of the insulating tube (2) and/or arranging the permeation barrier (5) within the insulating tube (2) such that the permeation barrier (5) circumferentially surrounds the electric high voltage appliance (3) arranged inside the insulating tube (2), and
filling the insulating tube (2) with an insulation gas (4) comprising at least 70 % by volume of CO₂ and/or N₂ and comprising an elevated and pre-determined operating gas pressure level, whereby
the permeation barrier (5) comprises aluminium oxide and/or silicon oxide as permeation barrier layer (6), a carrier layer (7) protecting the permeation layer (6), which carrier layer (7) surrounds the permeation barrier layer (6) and a wettability layer (8) for increasing a surface energy, which wettability layer (8) surrounds both the permeation barrier layer (6) and the carrier layer (7).

10. Method according to the previous claim, comprising the steps of:
Applying the wettability layer (8) onto the insulating tube (2),
Applying the carrier layer (7) onto the wettability layer (8),
Applying the permeation barrier layer (6) onto the carrier layer (7),
Applying another carrier layer (7) onto the permeation barrier layer (6), and
Applying another wettability layer (8) onto the another carrier layer (7).

11. Method according to any of previous method claims, comprising the step of:
Applying glue (9) onto and/or between the permeation barrier layer (6), the carrier layer (7), the wettability layer (8) and/or the insulating tube (2).

12. Method according to any of previous method claims, comprising the step of:
Providing an outer side of the carrier layer (7) and/or the wettability layer (8) facing away from the permeation barrier layer (6) and/or a side of the insulating tube (2) facing the wettability layer (8) with a surface activation (10).

13. Method according to any of previous method claims, comprising the step of:
Providing a plurality of permeation barriers (5) preferably arranged distant to each other, and/or whereby
The insulation tube (2) is provided gas impermeable and/or comprises epoxy composite material.

14. Method according to any of previous method claims, whereby the carrier layer (7) comprises polyethylene terephthalate, PET, and/or the wettability layer (8) comprises polyamide.

15. Method according to any of previous method claims, whereby the electric high voltage appliance (3) is provided as a high voltage interrupter, whereby the electric apparatus (1) is provided as a gas insulated live tank circuit breaker, as a gas insulated dead tank circuit breaker, as a bushing or as a gas insulated switchgear, and/or as an outdoor gas insulated electric apparatus.
